(19) Europäisches Patentamt
European Patent Office
Office européen des brevets

(11) **EP 4 624 889 A1**

(12) **EUROPEAN PATENT APPLICATION**
published in accordance with Art. 153(4) EPC

(43) Date of publication:
01.10.2025 Bulletin 2025/40

(21) Application number: 24894287.2

(22) Date of filing: 10.07.2024

(51) International Patent Classification (IPC):
*G01M 3/16* (2006.01)    *G01M 3/40* (2006.01)
*H01M 10/48* (2006.01)    *H01M 10/42* (2006.01)
*G06Q 50/10* (2012.01)    *G08B 21/18* (2006.01)

(52) Cooperative Patent Classification (CPC):
G01M 3/16; G01M 3/40; G06Q 50/10; G08B 21/18;
H01M 10/42; H01M 10/48; Y02E 60/10

(86) International application number:
PCT/KR2024/009884

(87) International publication number:
WO 2025/110390 (30.05.2025 Gazette 2025/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.11.2023 KR 20230160742

(71) Applicant: LG Energy Solution, Ltd.
Seoul 07335 (KR)

(72) Inventor: AHN, Chi Ho
Daejeon 34122 (KR)

(74) Representative: Plasseraud IP
104 Rue de Richelieu
CS92104
75080 Paris Cedex 02 (FR)

(54) **BATTERY PACK MOISTURE SENSING MODULE, MOISTURE SENSING DEVICE USING SAME, AND BATTERY PACK PROTECTION METHOD**

(57) The present invention provides a battery pack moisture detection module including a case having a predetermined space inside thereof, a first dielectric formed on at least a part of an inner surface of the case, a second dielectric formed inside the case at a predetermined height from a lower surface of the case, and a moisture detection unit electrically connected to the second dielectric to detect moisture infiltrating into the case, a moisture detection device using the same, and a method of protecting the battery pack.

**Fig. 1**

400 : 410, 420, 430

EP 4 624 889 A1

**Description**

## TECHNICAL FIELD

The present invention relates to a battery pack, and more particularly, to a module that detects moisture infiltrating into the battery pack, a moisture detection device using the same, and a method of protecting the battery pack.

## BACKGROUND ART

A secondary battery capable of charging and discharging, that is, a battery, is widely used as an energy source for mobile devices such as smart phones. Furthermore, the battery is used as an energy source for eco-friendly vehicles such as an electric vehicle and a hybrid electric vehicle proposed as a solution to air pollution caused by a gasoline vehicle and a diesel vehicle using fossil fuels. The types of applications using the battery are becoming very diverse, and it is expected that the battery will be applied to more fields and products than now in the future.

Currently commercialized available batteries include a nickel cadmium battery, a nickel hydrogen battery, a nickel zinc battery, and a lithium-ion battery. Among these batteries, the lithium-ion battery is spotlighted due to its advantages of free charge and discharge, very low self-discharge rate, and high energy density because the memory effect hardly occurs compared to the nickel-based battery. In addition, since the lithium-ion battery can be manufactured to be lightweight in a small size, the lithium-ion battery is used as a power source for mobile devices, and the use range thereof has been expanded as a power source for the electric vehicle, thereby drawing attention as a next-generation energy storage medium.

These batteries are generally used in the form of a battery pack rather than as a single battery cell. The battery pack includes at least one or more battery modules, and the battery module may be composed of a plurality of battery cells. The battery pack has been developed in high capacity and high voltage specifications so that it can be used longer and driven more powerfully in response to consumer demands. In addition, a battery management system (BMS) is provided to manage the overall state of battery cells, battery modules, or battery packs. The BMS checks the performance and state of the battery and performs battery diagnosis to ensure a stable operation of the battery.

Meanwhile, the battery pack is vulnerable to moisture, and thus a waterproof structure is adopted therefor. To prevent moisture from infiltrating into the battery pack, various techniques have been used, such as filling the inside of the battery pack with a waterproof filling liquid or coating the inside of the battery pack. In addition, when a waterproof structure is lost, performance thereof deteriorates rapidly, and thus it is necessary to quickly detect whether the waterproof structure is lost or submerged. However, in the related art, there is a lack of means to detect moisture infiltration into the inside of the battery pack and perform safe operations in response thereto.

Examples of the related art include Korean unexamined patent publication No. 2023-0061042 and Korean unexamined patent publication No. 2021-0037459.

## DISCLOSURE OF THE INVENTION

### TECHNICAL PROBLEM

The present invention provides a battery pack moisture detection module capable of detecting moisture infiltrating into the inside of a battery pack, a moisture detection device using the same, and a method of protecting the battery pack.

The present invention provides a battery pack moisture detection module that can perform a safe operation of a battery pack to detect moisture infiltrating into the inside of the battery pack, a moisture detection device using the same, and a method of protecting the battery pack.

### TECHNICAL SOLUTION

A battery pack moisture detection module according to an embodiment of the present invention includes a case having a predetermined space inside thereof, a first dielectric formed on at least a part of an inner surface of the case, a second dielectric formed in the inner space of the case at a predetermined height from a lower surface of the case, and a moisture detection unit electrically connected to the second dielectric to detect moisture infiltrating into the inside of the case.

The battery pack moisture detection module further comprises an external connection terminal that is connected to the second dielectric and extends to the outside of the case to electrically connect the inside and outside of the case.

The battery pack moisture detection module comprises a first moisture infiltration port formed on the lower part of the case of on one side of the second dielectric, and a second moisture infiltration port formed on the upper part of the case on the other side of the second dielectric.

The battery pack moisture detection module further comprises an extension part formed to extend from the second moisture infiltration port into the inner space of the case.

The first dielectric has an upper end that is electrically open and a lower end connected to ground.

The second dielectric is formed to have a predetermined height and width from one side wall of the case to the other side wall opposite thereto to divide the internal space of the case.

A surface of the second dielectric is coated with an insulator.

The moisture detection unit comprises a plurality of resistance bodies formed on one side and the other side of the second dielectric, and detects moisture infiltration and an amount of moisture as resistance thereof changes depending on the amount of moisture flowing into the case.

The moisture detection unit includes a first resistor and a second resistor formed on one side of the second dielectric, the first resistor and the second resistor being spaced apart from each other in a height direction of the second dielectric, and a third resistor formed on another side of the second dielectric.

In the moisture detection unit, the first to third resistance bodies are sequentially submerged according to the amount of moisture infiltrating into the case or a direction of moisture infiltration, and accordingly, a resistance value changes.

In addition, a battery pack moisture detection device according to another embodiment of the present invention includes a reference voltage $V_{ref}$, a reference resistance $R_{ref}$, a moisture detection module that detects moisture flowing into a battery pack according to a change in resistance, and a control unit that determines whether moisture infiltrates and an amount of moisture infiltration by using a voltage drop amount due to a resistance value of the moisture detection module with respect to the reference voltage $V_{ref}$ as an input voltage $V_{in}$.

The control unit determines that moisture has not infiltrated if the input voltage $V_{in}$ is equal to the reference voltage $V_{ref}$.

The control unit determines that a first amount of moisture has infiltrated from a lower part of the moisture detection module if the input voltage $V_{in}$ is a first input voltage $V_{in1}$ as in [Equation 1].

[Equation 1]

$$V_{in1} = V_{ref} \times \frac{R_1}{R_{ref} + R_1}$$

Here, $R_1$ is a first resistance value of a first resistance body of the moisture detection module.

The control unit determines that a second amount of moisture greater than the first amount of moisture has infiltrated from the lower part of the moisture detection module if the input voltage $V_{in}$ is a second input voltage $V_{in2}$ as in [Equation 2].

[Equation 2]

$$V_{in2} = V_{ref} \times \frac{\dfrac{R_1 \times R_2}{R_1 + R_2}}{R_{ref} + \dfrac{R_1 \times R_2}{R_1 + R_2}}$$

Here, $R_1$ and $R_2$ are the first resistance value of the first resistance body and a second resistance value of a second resistance body of the moisture detection module, respectively.

The control unit determines that a third amount of moisture greater than the second amount of moisture has infiltrated from the lower part of the moisture detection module if the input voltage $V_{in}$ is a third input voltage $V_{in3}$ as in [Equation 3].

[Equation 3]

$$V_{in3} = V_{ref} \times \cfrac{\cfrac{R_1 \times R_2 \times R_3}{R_2 \times R_3 + R_1 \times R_3 + R_1 \times R_2}}{R_{ref} + \cfrac{R_1 \times R_2 \times R_3}{R_2 \times R_3 + R_1 \times R_3 + R_1 \times R_2}}$$

Here, $R_1$, $R_2$, and $R_3$ are the first resistance value, the second resistance value, and a third resistance value of the first resistance body, the second resistance body, and a third resistance body of the moisture detection module, respectively.

The control unit determines that moisture has infiltrated from the upper side of the moisture detection module if the input voltage $V_{in}$ is a fourth input voltage $V_{in4}$ as in [Equation 4].

[Equation 4]

$$V_{in4} = V_{ref} \times \frac{R_3}{R_{ref} + R_3}$$

Here, $R_3$ is the third resistance value of the third resistance body of the moisture detection module.

A method of protecting a battery pack according to still another embodiment of the present invention is a method of protecting a battery pack using the battery pack moisture detection device according to another embodiment of the present invention, and includes a process of determining an input voltage $V_{in}$ according to an amount of moisture detected by a moisture detection module, a process of determining that moisture has not infiltrated and performing a normal operation if the input voltage $V_{in}$ is equal to a reference voltage $V_{ref}$, a process of determining that a first amount of moisture has infiltrated and transmitting a warning message to a user if the input voltage $V_{in}$ is a first input voltage $V_{in1}$, a process of determining that a second amount of moisture greater than the first amount of moisture has infiltrated and performing a battery pack protection operation if the input voltage $V_{in}$ is a second input voltage $V_{in2}$, and a process of stopping an operation of battery pack by determining that moisture has infiltrated from the upper side of the moisture detection module or a third amount of moisture greater than the second amount of moisture has infiltrated from the lower part of the moisture detection module if the input voltage $V_{in}$ is a third input voltage $V_{in3}$ or a fourth input voltage $V_{in4}$.

ADVANTAGEOUS EFFECTS

The battery pack moisture detection module according to an embodiment of the present invention is provided with the second dielectric provided in a central portion of the case where a predetermined space is provided, and a moisture detection unit that detects moisture is connected to the second dielectric, thereby capable of detecting moisture infiltrating through first and second moisture infiltration ports formed on the bottom and top of the case, respectively. In this case, the moisture detection unit may be made of a resistor having a predetermined resistance value due to moisture, and may be made of a plurality of resistors so that the resistance value changes depending on an amount of moisture infiltration. In addition, the battery pack moisture detection device according to an embodiment of the present invention can detect the amount of moisture from the resistors of the moisture detection module and the reference resistor and perform the battery pack protection operation accordingly.

Therefore, the present invention can safely protect the battery pack and ensure a safe operation of the battery pack by detecting moisture infiltrating into the battery pack.

**BRIEF DESCRIPTION OF THE DRAWINGS**

FIG. 1 is a schematic diagram of a moisture detection module according to an embodiment of the present invention.
FIG. 2 is a schematic diagram of a moisture detection device according to another embodiment of the present invention using a moisture detection module of a battery pack according to an embodiment of the present invention.

FIG. 3 is an equivalent circuit diagram of a moisture detection device depending on an amount of moisture that has infiltrated into the moisture detection module.

FIG. 4 is a graph showing a difference in input voltage of a moisture detection device according to an amount of moisture that has infiltrated into the moisture detection module.

FIG. 5 is a block diagram for describing a configuration of a battery pack including a moisture detection module and a moisture detection device using the moisture detection module according to embodiments of the present invention.

FIG. 6 is a flowchart for describing a method of protecting a battery pack battery according to another embodiment of the present invention.

## MODE FOR CARRYING OUT THE INVENTION

Hereinafter, embodiments of the present disclosure will be described in detail with reference to the accompanying drawings. However, the present disclosure is not limited to the embodiments disclosed below, but will be implemented in a variety of different forms, and these embodiments are provided only to complete the disclosure of the present disclosure and to fully inform those skilled in the art of the scope of the invention.

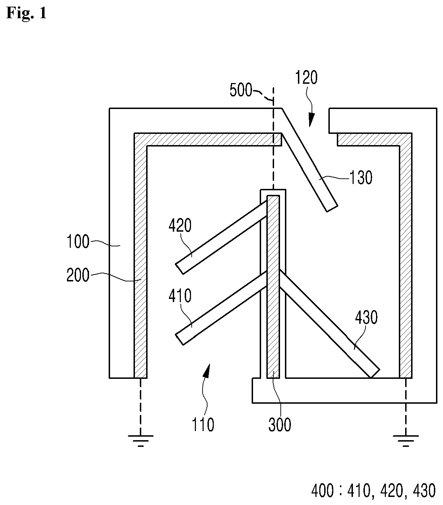

FIG. 1 is a schematic diagram of a moisture detection module according to an embodiment of the present invention. That is, FIG. 1 is a cross-sectional view of the moisture detection module according to an embodiment of the present invention cut in the vertical direction.

Referring to FIG. 1, the moisture detection module according to an embodiment of the present invention may include a case 100 that has a predetermined space inside thereof and forms an appearance of the moisture detection module, a first dielectric 200 formed on at least a part of an inner surface of the case 100, a second dielectric 300 formed inside the case 100 at a predetermined height from a lower surface of the case 100, and a moisture detection unit 400 connected to the second dielectric 300 to detect moisture infiltrating into the inside of the case 100. In addition, at least one moisture infiltration port 110 and 120 through which moisture flowing into the battery pack infiltrates is formed on at least a part of the case 100, the first dielectric 200 has an upper end that is electrically open and a lower end connected to ground, and a surface of the second dielectric 300 is coated with an insulator so as not to directly come into contact with moisture. The moisture detection unit detects moisture infiltration and an amount of moisture as resistance thereof changes depending on the amount of moisture flowing into the case, and for this purpose, the moisture detection unit 400 may include a plurality of resistance bodies 410, 420, and 430 formed on one side and the other side of the second dielectric 300. The moisture detection unit 400 may further include a connection terminal 500 extending from the second dielectric 300 to the outside of the case 100 to connect the inside and outside of the case 100. That is, the connection terminal 500 connects the second dielectric 300 and the moisture detection device. The moisture detection module according to an embodiment of the present invention will be described in more detail for each component as follows.

### 1. Case

The case 100 is formed of an insulator to form an appearance of a moisture detection module, and may have a shape with a predetermined space inside thereof. That is, the case 100 may be provided in various shapes having a predetermined space inside thereof. For example, the case 100 may have a shape such as a cube, a rectangular prism, or a cylindrical shape with at least part of the upper and lower surfaces sealed, with a predetermined space provided inside.

In addition, the case 100 may have moisture infiltration ports 110 and 120 formed thereon to allow moisture to infiltrate into the case 100. The moisture infiltration ports 110 and 120 may be formed on at least one surface of the case 100. For example, the moisture infiltration ports 110 and 120 may be formed on a lower surface of the case 100, and may be formed on the lower surface and an upper surface thereof. That is, the moisture infiltration ports 110 and 120 may include a first moisture infiltration port 110 formed on the lower surface of the case 100 and a second moisture infiltration port 120 formed on the upper surface of the case 100. In this case, the first and second moisture infiltration ports 110 and 120 may be formed in areas crossing each other in the vertical direction. For example, the first and second moisture infiltration ports 110 and 120 may be formed of a lower part on one side and an upper part on the other side of the second dielectric 300, respectively, with the second dielectric 300 formed inside the case 100 as a center. Moisture may infiltrate into the inside of the moisture detection module, that is, the inside of the case 100, through these moisture infiltration ports 110 and 120. That is, moisture may infiltrate from a lower part of the moisture detection module through the first moisture infiltration port 110, and moisture may infiltrate from an upper part of the moisture detection module through the second moisture infiltration port 120. Moisture infiltrating through the first moisture infiltration port 110 may flow in from the lower part on one side of the second dielectric 300 and rise up, and flow beyond the second dielectric 300 and into the other side of the second dielectric 300, depending on the amount of moisture. In addition, moisture infiltrating through the second moisture infiltration port 120 may flow in from the lower part on the other side of the second dielectric 300 and rise up, and flow beyond the second dielectric 300 into one side of the second dielectric 300, depending on the amount of moisture.

In addition, on the case 100, an extension part 130 extending from the second moisture infiltration port 120 formed on the upper part thereof into the inside of the case 100 may be formed. The extension part 130 is an extension part of the case 100 and is formed of an insulator, and may be formed to extend in the direction of one side of the moisture detection module, that is, the second dielectric 300 formed in the central portion of the case 100. That is, the second dielectric 300 is formed in the central portion of the moisture detection module, and as the moisture detection unit 400, the first and second resistance bodies 410 and 420 are formed on one side of the second dielectric 300 and the third resistance body 430 is formed on the other side thereof. The extension part 130 may be formed to extend by being inclined in the direction of the third resistance body 430 so that infiltrating moisture is guided toward the third resistance body 430. Accordingly, moisture infiltrating into the second moisture infiltration port 120 may flow into the third resistance body 430 formed on the other side of the second dielectric 300.

Meanwhile, the case 100 may be formed of an insulator. For example, the case 100 may be formed of plastic, glass, rubber, etc. That is, the case 100 may be formed of an insulator such as plastic in which at least one moisture infiltration port 110 and 120 is formed in an opening shape in a predetermined area.

## 2. First dielectric

The first dielectric 200 may be formed on at least a part of an inner surface of the case 100. That is, the first dielectric 200 is formed on inner-side surfaces of the case 100 and at least a part of an inner-side upper surface of the case 100. For example, the first dielectric 200 is not formed on a lower surface inside the case 100 and a part of the upper surface inside the case 100. That is, the first dielectric 200 is not formed on the entire lower surface of the case 100 and an area where the second moisture infiltration port 120 is formed. Accordingly, the upper end of the first dielectric 200 is electrically open. In addition, the lower end of the first dielectric 200 may be connected to a ground terminal. That is, the first dielectric 200 is formed on inner walls of the side walls of the case 100, extends in the height direction from the side walls to the top, the upper end thereof is electrically open, and the lower end thereof is connected to ground. This first dielectric 200 may be formed of a material having a predetermined dielectric constant, for example, ceramic. In the cross-sectional view of FIG. 1, the first dielectric 200 is illustrated as being formed on the inner-side walls of the case 100 when viewed with reference to FIG. 1. The first dielectric 200 may also be formed on the inner-side wall surfaces of the case 100 in the front/rear direction although the first dielectric 200 is not visible in FIG. 1. The first dielectric 200 is only illustrated to be connected to ground at the lower parts thereof on both sides of FIG. 1 in order to illustrate that the lower parts of the first dielectric 200 are connected to ground even when the first dielectric 200 is not interconnected by the first and second moisture infiltration ports 110 and 120, and the first dielectric 200 formed on the side walls of case 100 is not necessarily formed separately from each other. The present invention includes both a case where the first dielectric 200 is formed separately and a case where the first dielectric 200 is formed integrally.

## 3. Second dielectric

The second dielectric 300 is provided inside the moisture detection module. That is, the second dielectric 300 may be provided inside the case 100. This second dielectric 300 may be formed to have a predetermined height and width from the lower surface of the case 100 to the top. In this case, the internal space of the moisture detection module may be bisected (i.e., divided into two) by the second dielectric 300. That is, the second dielectric 300 is formed to have a predetermined height and width and may be formed from one side wall of the case 100 to the other side wall thereof opposite thereto. In this case, if the first dielectric 200 is formed on the sidewall, the second dielectric 300 formed up to the other sidewall is formed only to an extent that the second dielectric 300 does not contact the first dielectric 200.

Therefore, the inside of the moisture detection module may be divided into one side and the other side of the second dielectric 300 by the second dielectric 300. In addition, the second dielectric 300 may be formed to have a height that does not reach the upper surface of the moisture detection module from the lower surface of the moisture detection module.

In addition, with the second dielectric 300 as the center, the first moisture infiltration port 110 is located on the lower part on one side of the second dielectric 300, and the second moisture infiltration port 120 is located on the upper part on the other side of the second dielectric 300. Accordingly, when the moisture flowing in from the first moisture infiltration port 110 fills in one side of the second dielectric 300 and rises up to a height thereof, the moisture flows beyond the second dielectric 300 and overflows to the other side of the second dielectric 300. In this case, since the extension part 130 is formed on the top of the case 100, moisture overflowing from one side of the second dielectric 300 may flow to the other side of the second dielectric 300 without being discharged to the outside of the case 100.

In addition, the surface of the second dielectric 300 may be coated with an insulator. That is, the side surfaces, upper surface, and lower surface of the second dielectric 300 may be coated with an insulator. Accordingly, the lower surface of the second dielectric 300 may be electrically open. However, the second dielectric 300 is electrically connected to an external connection terminal 500 through a separate connection wire, and is formed to be insulated from the first dielectric 200.

Meanwhile, the second dielectric 300 may be formed of a material having a predetermined dielectric constant, and may be formed of the same material as the first dielectric 200, or may be formed of a different material. For example, the second dielectric 300 may be ceramic.

## 4. Moisture detection unit

The moisture detection unit 400 is provided inside the moisture detection module and detects moisture flowing into the moisture detection module. The moisture detection unit 400 is spaced apart from the case 100 at a predetermined distance in the height direction of the second dielectric 300, and is formed to be electrically connected to the second dielectric 300. This moisture detection unit 400, as resistance thereof changes depending on the amount of moisture flowing into the case, detects moisture infiltration and detects the amount of moisture that has infiltrated into the inside of the moisture detection module. To this end, the moisture detection unit 400 may include a plurality of resistance bodies 410, 420, and 430 formed on one side and the other side of the second dielectric 300. That is, the moisture detection unit 400 may include the first to third resistance bodies 410, 420, and 430 connected to the second dielectric 300. One side of the first to third resistance bodies 410, 420, and 430 is electrically connected to the second dielectric 300.

The first and second resistance bodies 410 and 420 may be formed on one side of the second dielectric 300, and the third resistance body 430 may be formed on the other side of the second dielectric 300. The first resistance body 410 may be formed to extend downward at a predetermined angle from the side surface of the second dielectric 300 in the height direction. In addition, the second resistance body 420 may be formed to extend downward at a predetermined angle from a position higher than the first resistance body 410 in the height direction of the second dielectric 300. In addition, the third resistance body 430 may be formed to extend downward from a predetermined height on the other side surface opposite to the one side surface of the second dielectric 300 on which the first and second resistance bodies 410 and 420 are formed. In this case, angles formed by the first to third resistance bodies 410, 420, and 430 with the second dielectric 300 may be the same. In addition, the first and second resistance bodies 410 and 420 may be formed to have the same length, and the third resistance body 430 may be formed to have a different length from those of the first and second resistance bodies 410 and 420. For example, the third resistance body 430 may be formed to be longer than the first and second resistance bodies 410 and 420, and may also be formed to be in contact with the inner lower surface of the case 100. The first to third resistance bodies 410, 420, and 430 may be formed of a material having a predetermined insulation resistance, and resistance values of the first to third resistance bodies 410, 420, and 430 may be the same or different.

The first moisture infiltration port 110 is located on the lower part on one side of the case 100 and the second moisture infiltration part 120 is located on the upper part on the other side, with the second dielectric 300 as the center. That is, the first moisture infiltration port 110 is formed on the lower part on one side of the second dielectric 300 where the first and second resistance bodies 410 and 420 are formed, and the second moisture infiltration port 120 is formed on the other side of the second dielectric 300 where the third resistance body 430 is formed.

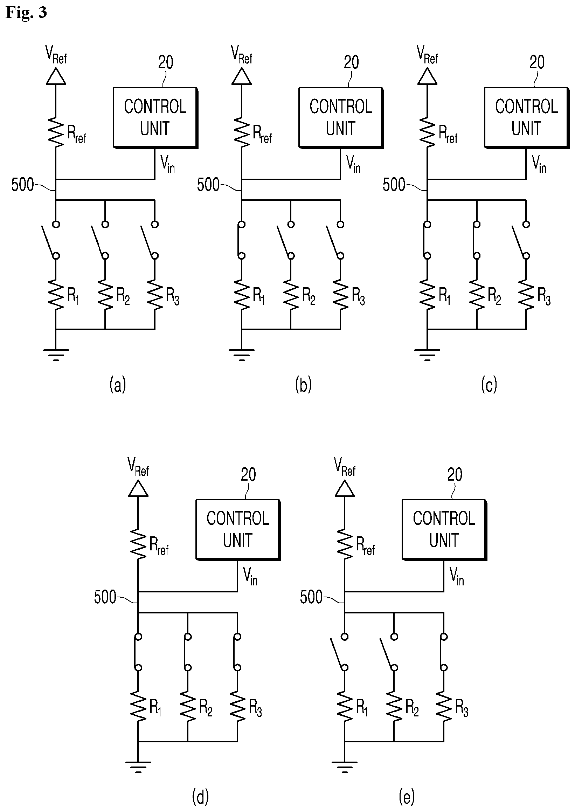

When moisture flows in through the first moisture infiltration port 110 and moisture fills in the inside of the case 100 and rises up, the first resistance body 410 is submerged in moisture. In this case, an electrical path is formed between the first resistance body 410 and the first dielectric 200 due to the electrolyte in the moisture, and current from the external connection terminal 500 flows to the ground terminal through the second dielectric 300, the first resistance body 410, and the first dielectric 200. Accordingly, the moisture detection circuit to be described below is connected by the external connection terminal 500, and the moisture detection circuit is expressed as an equivalent circuit in (b) of FIG. 3 having a resistance value of a composite resistor in which the reference resistor $R_{ref}$ and a first resistor $R_1$ of the first resistance body 410 are connected in series.

Thereafter, if moisture continues to flow in, moisture further fills in the inside of the case 100 and rises up and the second resistance body 420 is submerged in moisture. Likewise, an additional electrical path is formed between the second resistance body 420 and the first dielectric 200 due to the electrolyte in the moisture, and current flows. Accordingly, the composite resistor of the first and second resistors $R_1$, $R_2$ of the first and second resistance bodies 410 and 420 is connected to the moisture detection circuit via the external connection terminal 500. As a result, the moisture detection circuit has a resistance value of that combines the reference resistance $R_{ref}$ with the parallel composite resistance of the first and second resistors $R_1$, $R_2$, which can be expressed as an equivalent circuit in (c) of FIG. 3.

In addition, if moisture continues to flow into the case 100, moisture continues to fill in the inside of case and rises up, the moisture flows beyond the second dielectric 300 and overflow to the other side of the second dielectric 300. Accordingly, the third resistance body 430 is submerged in moisture. Even in this case, an additional electrical path is formed between the third resistance body 430 and the first dielectric 200 and current flows. Accordingly, the parallel composite resistor of the first to third resistors $R_1$, $R_2$, $R_3$ of the first to third resistance bodies 410, 420, 430 is connected to the moisture detection circuit via the external connection terminal 500. As a result, the moisture detection circuit has a resistance value that combines the reference resistance $R_{ref}$ with the parallel composite resistance of the first to third resistors $R_1$, $R_2$, $R_3$, which can be represented as an equivalent circuit as shown in (d) of FIG. 3.

As described above, the moisture detection module of the battery pack according to an embodiment of the present invention is provided with the second dielectric 300 provided in the center of the inside of the case 100 having a predetermined space inside thereof. In the battery pack moisture detection module, the moisture detection unit 400 that detects moisture may be connected to the second dielectric 300 to detect moisture infiltrating through the moisture infiltration ports 110 and 120 formed on the lower part and upper part of the case 100, respectively. In this case, the moisture detection unit 400 may be configured with a plurality of resistance bodies 410, 420, and 430 that have a predetermined resistance value due to moisture, and may detect the amount of moisture as the resistance value changes depending on an amount of moisture infiltration. Therefore, moisture infiltrating into the battery pack may be detected to safely protect the battery pack and to ensure the safety operation of the battery pack.

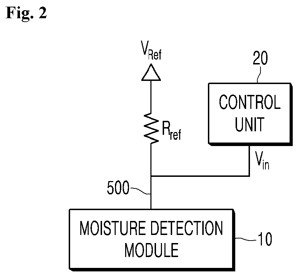

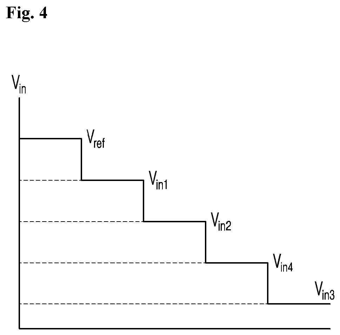

FIG. 2 is a schematic diagram of a moisture detection device using a moisture detection module of a battery pack according to an embodiment of the present invention. In addition, FIG. 3 illustrates equivalent circuit diagrams of a moisture detection device according to the amount of moisture that has infiltrated into the moisture detection module. FIG. 4 is a graph illustrating a difference in input voltage of the moisture detection device according to the amount of moisture that has infiltrated into the moisture detection module.

Referring to FIGS. 2 and 3, the battery pack moisture detection device according to an embodiment of the present invention may include a reference voltage $V_{ref}$, a reference resistance $R_{ref}$, a moisture detection module 10 that detects moisture flowing into a battery pack according to a change in resistance, and a control unit 20 that determines whether moisture infiltrates and the amount of moisture infiltration by using the reference voltage $V_{ref}$ according to the reference resistance $R_{ref}$ and resistance value of the moisture detection module 10 as an input voltage $V_{in}$.

As described with reference to FIG. 1, the outside of the moisture detection module 10 is made of an insulator, and the inside thereof is made of a dielectric and a resistance body. That is, the moisture detection module 10 may include the case 100 made of an insulator, the first and second dielectrics 200 and 300 formed inside the case 100, and the moisture detection unit 400 made of the first to third resistance bodies 410, 420, and 430 connected to the second dielectric 300. Here, the first dielectric 200 forms a path with the second dielectric 300 when moisture infiltrates into the module, and the moisture detection unit 400 sequentially connects the first to third resistance bodies 410, 420, and 430 to the first dielectric 200 according to the amount of infiltrating moisture, thereby changing the resistance of the moisture detection module. Meanwhile, the first to third resistance bodies 410, 420, and 430 may be represented as first to third resistors $R_1$, $R_2$, and $R_3$ connected in parallel as illustrated in FIG. 3. In this case, the first to third resistors $R_1$, $R_2$, and $R_3$ may be selectively connected to the moisture detection circuit depending on the amount of moisture infiltration. Meanwhile, the first to third resistors $R_1$, $R_2$, and $R_3$ may have a predetermined resistance value, and the first to third resistors $R_1$, $R_2$, and $R_3$ may have different resistance values, respectively, or may have the same resistance value. When the first to third resistors $R_1$, $R_2$, and $R_3$ have different resistance values, the third resistance body 430 is connected first, so that the control unit 20 may determine whether moisture infiltrates into the lower part or infiltrates into the upper part of the case of the moisture detection module.

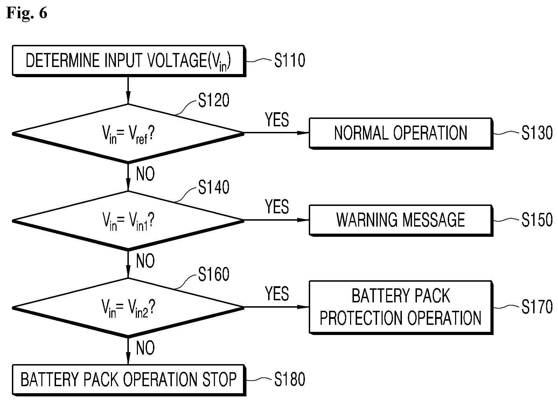

In this case, the control unit 20 determines the amount of moisture detected by the moisture detection module 10. That is, the resistance value of the moisture detection module 10 changes depending on the amount of moisture detected to infiltrate, and the control unit 20 determines the amount of moisture detected by determining a change in resistance value of the moisture detection module 10. To this end, the control unit 20 may use a voltage value of an applied input voltage $V_{in}$. That is, the control unit 20 may determine the amount of moisture flowing into the battery pack according to the voltage value of the input voltage $V_{in}$. In addition, the control unit 20 may perform a battery pack protection operation according to the moisture flowing into the battery pack. In this case, the control unit 20 may perform battery protection operations differently depending on the amount of moisture. For example, if the amount of moisture is small, a warning message may be sent to a user, and the battery pack protection operation may be performed or an operation of the battery pack may be stopped, depending on an increasing amount of moisture. The battery pack protection method will be described in more detail below using FIG. 6.

An operation method of a moisture detection device according to another embodiment of the present invention will be described using the equivalent circuit diagram of FIG. 3 according to the amount of moisture infiltrating as follows.

First, if there is no moisture infiltration into a battery pack, the first to third resistors $R_1$, $R_2$, and $R_3$ are maintained in an open state with the reference resistor $R_{ref}$, as illustrated in the circuit diagram of (a) of FIG. 3. That is, if moisture does not infiltrate, the first to third resistance bodies 410, 420, and 430 of the moisture detection module 10 are not electrically connected to the first dielectric 200, and thus it is interpreted that the first to third resistors $R_1$, $R_2$, and $R_3$ are not connected to the reference resistor $R_{ref}$. Accordingly, the input voltage $V_{in}$ input to the control unit 20 is equal to the reference voltage $V_{ref}$. In other words, it can be expressed as $V_{in} = V_{ref}$. Therefore, when the input voltage $V_{in}$ and the reference voltage $V_{ref}$ are the same, the control unit 20 determines that it is a state in which no moisture is detected, that is, a state in which moisture has not infiltrated. In this case, the input voltage $V_{in}$ has a voltage value of $V_{ref}$ as illustrated in FIG. 4 (the equivalent circuit of (a) of FIG. 3).

Moisture infiltrating from the lower part of the moisture detection module 10 flows into the inside of the moisture detection module 10 through the first moisture infiltration port 110 on the lower part of the moisture detection module 10.

When the moisture flowing into the inside of the moisture detection module 10 fills in the first resistance body 410 and rises to the height thereof, the first resistance body 410 is submerged in moisture. In this case, an electrical path is formed between the first resistance body 410 and the first dielectric 200 due to the electrolyte in the moisture, and current flows. Accordingly, the first resistor $R_1$ is connected to the moisture detection device, and the second and third resistors $R_2$ and $R_3$ are not connected to the moisture detection device. In other words, the first resistor $R_1$ is turned on, and the second and third resistors $R_2$ and $R_3$ are turned off. Therefore, as illustrated in (b) of FIG. 3, the first resistor $R_1$ is connected in series with the reference resistor $R_{ref}$, and accordingly, the input voltage input to the control unit 20, that is, a first input voltage $V_{in1}$, may be expressed as [Equation 1]. In this case, the first input voltage $V_{in1}$ has a value smaller than a voltage value of the reference voltage $V_{ref}$, as illustrated in FIG. 4. When the input voltage is the first input voltage in Equation 1, the control unit 20 determines that a predetermined first amount of moisture has infiltrated.

[Equation 1]

$$V_{in1} = V_{ref} \times \frac{R_1}{R_{ref} + R_1}$$

Here, $R_1$ is the first resistance value of the first resistance body of the moisture detection module.

Thereafter, if moisture continues to flow in and fills in and rises up within the moisture detection module 10, the second resistance body 420 is also submerged, and an additional electrical path is formed between the second resistance body 420 and the first and second dielectrics 200 and 300. Accordingly, the first and second resistors $R_1$ and $R_2$ are turned on, and the third resistor $R_3$ is turned off. In this case, as illustrated in (c) of FIG. 3, the parallelly connected first and second resistors $R_1$ and $R_2$ are connected to the reference resistor $R_{ref}$, and a second input voltage $V_{in2}$ input to the control unit 20 may be expressed as [Equation 2]. In this case, the second input voltage $V_{in2}$ has a second voltage value $V_{in2}$ that is smaller than the first input voltage value $V_{in1}$, as illustrated in FIG. 4. If the input voltage $V_{in}$ is the second input voltage $V_{in2}$ as in [Equation 2], the control unit 20 may determine that a second amount of moisture greater than the first amount has infiltrated from the lower part of the moisture detection module.

[Equation 2]

$$V_{in2} = V_{ref} \times \frac{\dfrac{R_1 \times R_2}{R_1 + R_2}}{R_{ref} + \dfrac{R_1 \times R_2}{R_1 + R_2}}$$

Here, $R_1$ and $R_2$ are the first and second resistance values of the first and second resistance bodies 410 and 420 of the moisture detection module, respectively.

If moisture continues to flow in and fill in and rises up within the moisture detection module 10, the moisture flows beyond the second dielectric 300 and even the other side of the second dielectric 300 is submerged in moisture. In this case, when the third resistance body 430 is submerged in moisture, an additional electrical path is formed between the third resistance body 430 and the first and second dielectrics 200 and 300. Accordingly, the first to third resistors $R_1$, $R_2$, and $R_3$ are turned on. In this case, as illustrated in (d) of FIG. 3, the parallelly connected first to third resistors $R_1$, $R_2$, and $R_3$ are connected to the reference resistor $R_{ref}$, and a third input voltage $V_{in3}$ input to the control unit 20 may be expressed as [Equation 3]. In this case, the third input voltage $V_{in3}$ has a value smaller than the second input voltage $V_{in2}$, as illustrated in FIG. 4. If the input voltage $V_{in}$ is the third input voltage $V_{in3}$ as in [Equation 3], the control unit 20 may determine that a third amount of moisture greater than the second amount has infiltrated from the lower part of the moisture detection module.

[Equation 3]

$$V_{in3} = V_{ref} \times \cfrac{\cfrac{R_1 \times R_2 \times R_3}{R_2 \times R_3 + R_1 \times R_3 + R_1 \times R_2}}{R_{ref} + \cfrac{R_1 \times R_2 \times R_3}{R_2 \times R_3 + R_1 \times R_3 + R_1 \times R_2}}$$

Here, $R_1$, $R_2$, and $R_3$ are the first to third resistance values of the first to third resistance bodies 410, 420, and 430 of the moisture detection module, respectively.

On the contrary, it may also be assumed that water pours down from the top. In this case, water is directly introduced through the second moisture infiltration port 120 at the upper end of the moisture detection module 10, and the third resistance body 430 is submerged in water. Even in this case, an electrical path is formed between the third resistance body 430 and the first dielectric 200, and thus only the third resistor $R_3$ is connected in series to the reference resistor $R_{ref}$, as illustrated in (e) of FIG. 3. In this case, a fourth input voltage $V_{in4}$ input to the control unit 20 may be expressed as [Equation 4]. As illustrated in FIG. 4, the fourth input voltage $V_{in4}$ has a fourth voltage value $V_{in4}$ that is greater than the third voltage value $V_{in3}$. In FIG. 4, the fourth input voltage value $V_{in4}$ is expressed as being smaller than the second input voltage value $V_{in2}$, but this may vary depending on the size of the third resistance body 430. If the input voltage $V_{in}$ is the fourth input voltage $V_{in4}$ as illustrated in [Equation 4], the control unit 20 may determine that moisture has infiltrated from the upper part of the moisture detection module.

[Equation 4]

$$V_{in4} = V_{ref} \times \frac{R_3}{R_{ref} + R_3}$$

Here, $R_3$ is the third resistance value of the third resistance body 430 of the moisture detection module.

Meanwhile, under the assumption that the resistance values of the first to third resistors $R_1$, $R_2$, and $R_3$ are not all the same, the composite resistance for each situation appears as a distinct value, which in turn causes the input voltage $V_{in}$ input to the control unit 20 to appear as a distinct value. In addition, the control unit 20 of the BMS may recognize this and perform a differential safety operation suitable for each moisture intrusion situation.

As described above, the battery pack moisture detection device according to another embodiment of the present invention may include the reference voltage $V_{ref}$, the reference resistance $R_{ref}$, the moisture detection module 10 that detects moisture flowing into a battery pack according to a change in resistance, and the control unit 20 that determines whether moisture infiltrates and the amount of moisture infiltration by using the reference voltage $V_{ref}$ according to the reference resistance $R_{ref}$ and the resistance value of the moisture detection module 10 as the input voltage $V_{in}$. Therefore, the resistance value of the moisture detection module changes depending on the amount of moisture infiltrating into the moisture detection module 10, and the moisture detection device of the present invention may determine the amount of moisture infiltrating into the moisture detection module 10 according to the input voltage $V_{in}$ that changes according to a change in resistance value. The moisture detection device may perform a safe operation of the battery pack according to the amount of moisture infiltrating into the battery pack and thereby ensure the safe operation of the battery pack.

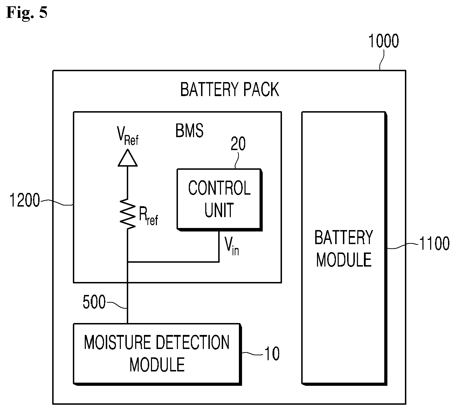

FIG. 5 is a block diagram for describing a configuration of a battery pack 1000 provided with a moisture detection device using the moisture detection module 10 according to an embodiment of the present invention.

Referring to FIG. 5, the battery pack 1000 according to the present invention may include a battery module 1100 including a plurality of battery cells, a BMS 1200 that manages the battery pack 1000, a moisture detection device provided in the BMS 1200 and including a reference resistance $R_{ref}$, a reference voltage $V_{ref}$, and the control unit 20, and the moisture detection module 10 according to an embodiment of the present invention connected to the moisture detection device. That is, the moisture detection module 10 according to an embodiment of the present invention is provided outside the BMS 1200, and the moisture detection device is provided within the BMS 1200 and connected to the moisture detection module 10. In other words, the moisture detection module 10 outside the BMS 1200 is connected to the moisture detection device inside the BMS 1200.

FIG. 6 is a flowchart for describing a method of protecting a battery pack according to another embodiment of the present invention. That is, FIG. 6 is a flowchart for describing a method of protecting a battery pack using the battery pack moisture detection module according to embodiments of the present invention.

**EP 4 624 889 A1**

Referring to FIG. 6, the method of protecting a battery pack according according to an embodiment of the present invention may include a process of determining an input voltage $V_{in}$ of the control unit according to an amount of moisture detected by a moisture detection module (S110), a process of determining that moisture has not infiltrated and performing a normal operation (S130) if the input voltage $V_{in}$ is equal to a reference voltage $V_{ref}$(S120), a process of determining that a first amount of moisture has infiltrated and transmitting a warning message to a user (S150) if the input voltage $V_{in}$ is a first input voltage $V_{in1}$ (S140), a process of determining that a second amount of moisture greater than the first amount has infiltrated and performing a battery pack protection operation (S170) if the input voltage $V_{in}$ is a second input voltage $V_{in2}$ (S160), and a process of stopping a battery pack operation by determining that moisture has infiltrated from the upper part the moisture detection module or a third amount of moisture greater than the second amount has infiltrated from the lower part of the moisture detection module (S180) if the input voltage $V_{in}$ is a third input voltage $V_{in3}$ or a fourth input voltage $V_{in4}$. That is, the method of protecting the battery pack according to the present invention may transmit a warning message to the user to warn the user in advance or perform a battery pack safety operation, depending on the amount of moisture infiltrating into the battery pack.

The control unit 20 determines the amount of moisture infiltrating into the battery pack according to the resistance value from the moisture detection module 10. That is, the control unit 20 may determine the amount of moisture according to the voltage value of the input voltage $V_{in}$ according to the reference resistance $R_{ref}$ and the resistance value from the moisture detection module 10. If the input voltage $V_{in}$ is the same as the reference voltage $V_{ref}$, it may determine that there is no moisture infiltration, and allow the battery pack to perform a normal operation. However, if the input voltage $V_{in}$ is a first input voltage $V_{in1}$ smaller than the reference voltage $V_{ref}$, it may determine that a small amount of moisture has infiltrated to the extent that the first resistance body of the moisture detection module 10 is submerged, and transmit a warning message to the user. In addition, if the input voltage $V_{in}$ is a second input voltage $V_{in2}$ that is smaller than the first input voltage $Vi_{n1}$, it may determine that a heavy amount of moisture has infiltrated to the extent that the second resistance body 420 of the moisture detection module 10 is submerged, and allows a battery pack protection operation to be performed. In addition, if the input voltage $V_{in}$ is a third input voltage $V_{in3}$ that is smaller than the second input voltage $V_{in2}$, or a fourth input voltage $V_{in4}$ that is smaller than the second input voltage $V_{in2}$ and larger than the third input voltage $V_{in3}$, it may determine that a large amount of moisture has infiltrated to the extent that the third resistance body 430 of the moisture detection module is submerged, and stop the operation of the battery pack.

As described above, the method of protecting the battery pack according to another embodiment of the present invention may transmit a warning message to the user to warn the user in advance, or allow a safety operation such as a battery pack protection operation or a battery pack operation stop, depending on the amount of moisture infiltrating into the battery pack.

The technical idea of the present invention as described above has been described in detail according to the above-mentioned embodiments, but it should be noted that the above-described embodiments are for its description and not intended to limit it. In addition, those skilled in the art will understand that various embodiments are possible within the scope of the technical idea of the present invention.

The drawings and reference numerals used in the present invention are as follows.

10: moisture detection module
20: control unit
100: case
110: first moisture infiltration port
120: second moisture infiltration port
130: extension part
200: first dielectric
300: second dielectric
400: moisture detection unit
410, 420, 430: first, second and third resistance bodies
500: external connection terminal
1000: battery pack
1100: battery module
1200: BMS

**Claims**

1. A battery pack moisture detection module comprising:

a case having an internal space at an inside of the case;

11

a first dielectric formed on at least a part of an inner surface of the case;
a second dielectric formed inside the case at a predetermined height from a lower surface of the case; and
a moisture detection unit electrically connected to the second dielectric to detect moisture infiltrating into the inside of the case.

2. The battery pack moisture detection module of claim 1, further comprising:
an external connection terminal that is connected to the second dielectric and extends to an outside of the case to electrically connect the inside and the outside of the case.

3. The battery pack moisture detection module of claim 1, further comprising:

a first moisture infiltration port formed on the case at a lower part on one side of the second dielectric; and
a second moisture infiltration port formed on the case at an upper part on another side of the second dielectric.

4. The battery pack moisture detection module of claim 3, further comprising:
an extension part formed to extend from the second moisture infiltration port into the inside of the case.

5. The battery pack moisture detection module of claim 3, wherein the first dielectric has an upper end that is electrically open and a lower end that is connected to ground.

6. The battery pack moisture detection module of claim 5, wherein the second dielectric is formed to have a predetermined height and width from one side wall of the case to another side wall opposite to the one side wall to divide the internal space of the case.

7. The battery pack moisture detection module of claim 6, wherein a surface of the second dielectric is coated with an insulator.

8. The battery pack moisture detection module of claim 7, wherein the moisture detection unit comprises a plurality of resistance bodies formed on one side and another side of the second dielectric, and
wherein a resistance of the moisture detection unit changes depending on an amount of moisture infiltrating into the case

9. The battery pack moisture detection module of claim 8, wherein the moisture detection unit comprises:

a first resistor and a second resistor formed on one side of the second dielectric, the first resistor and the second resistor being spaced apart from each other in a height direction of the second dielectric; and
a third resistor formed on another side of the second dielectric.

10. The battery pack moisture detection module of claim 9, wherein in the moisture detection unit, the first, second and third resistors are sequentially saturated according to the amount of moisture infiltrating into the case or a direction of moisture infiltration.

11. A battery pack moisture detection device, comprising:

a reference voltage $V_{ref}$;
a reference resistor $R_{ref}$;
a moisture detection module configured to detect moisture infiltrating into a battery pack according to a change in a resistance of the moisture detection module; and
a control unit configured to determine whether moisture infiltrates the battery pack and an amount of moisture infiltration in the battery pack by using a voltage drop amount due to a resistance value of the moisture detection module with respect to the reference voltage $V_{ref}$ as an input voltage $V_{in}$.

12. The battery pack moisture detection device of claim 11, wherein the control unit determines that moisture has not infiltrated the battery pack when the input voltage $V_{in}$ is equal to the reference voltage $V_{ref}$.

13. The battery pack moisture detection device of claim 12, wherein the control unit determines that a first amount of moisture has infiltrated the battery pack from a lower part of the moisture detection module when the input voltage $V_{in}$ is a first input voltage $V_{in1}$ of [Equation 1],

[Equation 1]

$$V_{in1} = V_{ref} \times \frac{R_1}{R_{ref} + R_1}$$

where, $R_1$ is a first resistance value of a first resistance body of the moisture detection module.

14. The battery pack moisture detection device of claim 13, wherein the control unit determines that a second amount of moisture greater than the first amount of moisture has infiltrated from the lower part of the moisture detection module when the input voltage $V_{in}$ is a second input voltage $V_{in2}$ of [Equation 2],

[Equation 2]

$$V_{in2} = V_{ref} \times \frac{\dfrac{R_1 \times R_2}{R_1 + R_2}}{R_{ref} + \dfrac{R_1 \times R_2}{R_1 + R_2}}$$

where, $R_1$ and $R_2$ are the first resistance value of the first resistance body and a second resistance value of a second resistance body of the moisture detection module, respectively.

15. The battery pack moisture detection device of claim 14, wherein the control unit determines that a third amount of moisture greater than the second amount of moisture has infiltrated from the lower part of the moisture detection module when the input voltage $V_{in}$ is a third input voltage $V_{in3}$ of [Equation 3],

[Equation 3]

$$V_{in3} = V_{ref} \times \frac{\dfrac{R_1 \times R_2 \times R_3}{R_2 \times R_3 + R_1 \times R_3 + R_1 \times R_2}}{R_{ref} + \dfrac{R_1 \times R_2 \times R_3}{R_2 \times R_3 + R_1 \times R_3 + R_1 \times R_2}}$$

where, $R_1$, $R_2$, and $R_3$ are the first resistance value of the first resistance body, the second resistance value of the second resistance body, and a third resistance value of a third resistance body of the moisture detection module, respectively.

16. The battery pack moisture detection device of claim 15, wherein the control unit determines that moisture has infiltrated from an upper part of the moisture detection module when the input voltage $V_{in}$ is a fourth input voltage $V_{in4}$ of [Equation 4],

[Equation 4]

$$V_{in4} = V_{ref} \times \frac{R_3}{R_{ref} + R_3}$$

where, $R_3$ is the third resistance value of the third resistance body of the moisture detection module.

17. A method of protecting a battery pack using the battery pack moisture detection device according to claim 11, the method comprising:

a process of determining an input voltage $V_{in}$ according to an amount of moisture detected by a moisture detection module;

a process of determining that moisture has not infiltrated the battery pack and performing a normal operation when the input voltage $V_{in}$ is equal to a reference voltage $V_{ref}$;

a process of determining that a first amount of moisture has infiltrated the battery pack and transmitting a warning message to a user when the input voltage $V_{in}$ is a first input voltage $V_{in1}$;

a process of determining that a second amount of moisture greater than the first amount of moisture has infiltrated the battery pack and performing a battery pack protection operation when the input voltage $V_{in}$ is a second input voltage $V_{in2}$; and

a process of stopping an operation of battery pack by determining that moisture has infiltrated the battery pack from an upper part of the moisture detection module or a third amount of moisture greater than the second amount of moisture has infiltrated the battery pack from a lower part of the moisture detection module when the input voltage $V_{in}$ is a third input voltage $V_{in3}$ or a fourth input voltage $V_{in4}$.

**Fig. 1**

400 : 410, 420, 430

**Fig. 2**

**Fig. 3**

(a)　　　　　　　　　(b)　　　　　　　　　(c)

(d)　　　　　　　　　(e)

**Fig. 4**

**Fig. 5**

**Fig. 6**

DETERMINE INPUT VOLTAGE($V_{in}$) — S110

S120

$V_{in} = V_{ref}$?  — YES → NORMAL OPERATION — S130

NO

S140

$V_{in} = V_{in1}$?  — YES → WARNING MESSAGE — S150

NO

S160

$V_{in} = V_{in2}$?  — YES → BATTERY PACK PROTECTION OPERATION — S170

NO

BATTERY PACK OPERATION STOP — S180

## INTERNATIONAL SEARCH REPORT

| International application No. |
|---|
| **PCT/KR2024/009884** |

| **A.** | **CLASSIFICATION OF SUBJECT MATTER** |
|---|---|

**G01M 3/16**(2006.01)i; **G01M 3/40**(2006.01)i; **H01M 10/48**(2006.01)i; **H01M 10/42**(2006.01)i; **G06Q 50/10**(2012.01)i; **G08B 21/18**(2006.01)i

According to International Patent Classification (IPC) or to both national classification and IPC

| **B.** | **FIELDS SEARCHED** |
|---|---|

Minimum documentation searched (classification system followed by classification symbols)

G01M 3/16(2006.01); B60K 28/10(2006.01); G01F 23/26(2006.01); G08B 21/20(2006.01); H01M 10/48(2006.01); H01M 50/20(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 케이스(case), 유전체(dielectric), 배터리 팩(battery pack), 수분 침투 감지(moisture ingress detection)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | KR 10-2019-0070551 A (HYUNDAI MOTOR COMPANY et al.) 21 June 2019 (2019-06-21) See paragraphs [0017]-[0095]; and figures 1-5. | 11 |
| Y | | 1-2,12-15 |
| A | | 3-10,16-17 |
| Y | US 2009-0187357 A1 (HO, Kin-Wah et al.) 23 July 2009 (2009-07-23) See paragraphs [0020]-[0040]; and figures 1-9. | 1-2 |
| DY | KR 10-2023-0061042 A (LG ENERGY SOLUTION, LTD.) 08 May 2023 (2023-05-08) See paragraphs [0036]-[0044]; and figure 3. | 12-15 |
| A | KR 10-2013-0031763 A (LG CHEM, LTD.) 29 March 2013 (2013-03-29) See claim 1; and figures 2-3. | 1-17 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 October 2024** | **29 October 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/009884**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2019-0118434 A (HYUNDAI MOTOR COMPANY et al.) 18 October 2019 (2019-10-18)<br>See claim 1; and figures 3-5. | 1-17 |

Form PCT/ISA/210 (second sheet) (July 2022)

## INTERNATIONAL SEARCH REPORT
### Information on patent family members

International application No.

**PCT/KR2024/009884**

| Patent document cited in search report | | | Publication date (day/month/year) | Patent family member(s) | | | Publication date (day/month/year) |
|---|---|---|---|---|---|---|---|
| KR | 10-2019-0070551 | A | 21 June 2019 | CN | 109916474 | A | 21 June 2019 |
| | | | | CN | 109916474 | B | 17 September 2021 |
| | | | | KR | 10-2529912 | B1 | 08 May 2023 |
| | | | | US | 10935410 | B2 | 02 March 2021 |
| | | | | US | 2019-0178697 | A1 | 13 June 2019 |
| US | 2009-0187357 | A1 | 23 July 2009 | WO | 2009-092330 | A1 | 30 July 2009 |
| KR | 10-2023-0061042 | A | 08 May 2023 | | None | | |
| KR | 10-2013-0031763 | A | 29 March 2013 | CN | 103430223 | A | 04 December 2013 |
| | | | | CN | 103430223 | B | 06 July 2016 |
| | | | | EP | 2669874 | A1 | 04 December 2013 |
| | | | | EP | 2669874 | A4 | 14 January 2015 |
| | | | | JP | 2014-511491 | A | 15 May 2014 |
| | | | | JP | 5717262 | B2 | 13 May 2015 |
| | | | | KR | 10-1306506 | B1 | 09 September 2013 |
| | | | | US | 2013-0073237 | A1 | 21 March 2013 |
| | | | | US | 8990030 | B2 | 24 March 2015 |
| | | | | WO | 2013-042842 | A1 | 28 March 2013 |
| KR | 10-2019-0118434 | A | 18 October 2019 | KR | 10-2552491 | B1 | 06 July 2023 |
| | | | | US | 10840568 | B2 | 17 November 2020 |
| | | | | US | 2019-0312321 | A1 | 10 October 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20230061042

- KR 20210037459